# EUROPEAN PATENT SPECIFICATION

(11) **EP 4 280 142 B1**
(45) Date of publication and mention of the grant of the patent: **01.07.2026**
(21) Application number: 23165212.4
(22) Date of filing: 29.03.2023
(51) Int. Cl.: G06Q 20/12, G06Q 20/38, G06Q 20/40

(54) **SYSTEM AND METHOD FOR AUTOMATED FEATURE GENERATION AND USAGE IN IDENTITY DECISION MAKING**
SYSTEM UND VERFAHREN ZUR AUTOMATISCHEN MERKMALSERZEUGUNG UND -VERWENDUNG BEI DER IDENTITÄTSENTSCHEIDUNGSFINDUNG
SYSTÈME ET PROCÉDÉ DE GÉNÉRATION ET D'UTILISATION AUTOMATISÉES DE CARACTÉRISTIQUES DANS LA PRISE DE DÉCISION D'IDENTITÉ

(30) Priority: 20.05.2022 US 202217749645
(43) Date of publication of application: 22.11.2023
(60) Divisional application: 26174842.0
(73) Proprietor: Socure Inc., Incline Village, Nevada 89451 (US)
(72) Inventor: Abreu, Pablo Ysrrael, Miami, 33139 (US); Liu, David, Mesa, 85203 (US); Manchiraju, Vinay Abhishek, Brooklyn, 11215 (US); Tourret, Joffrey, High Falls, NY (US); Han, Sunhyoung, San Diego, CA (US); Hughes, Elliot, Brooklyn, NY (US)
(74) Representative: Derry, Paul Stefan

(56) References cited:
- US-A1- 2020 184 488

## Description

### FIELD OF THE INVENTION

The present invention is directed generally to systems and methodologies associated with enabling identity verification and more particularly to systems and methodologies which employ available transaction data to enhance the systems and models for verifying the identity of users attempting to engage in various transactions.

### BACKGROUND OF THE INVENTION

In today's business environment, almost all businesses have an online presence. A great majority of these businesses permit their customers to conduct transactions online. These transactions almost always involve either a financial component or otherwise require a trust-based element. For example, when a customer purchases a good or service, it is critical to determine that the person (or machine) initiating and conducting the transaction is who they say they are. This identity verification is required to ensure that the form of payment (e.g. credit card) is authorized for use by the purported purchaser. If the purchaser cannot be verified, then a variety of undesirable results can occur, such as chargebacks and other revenue losses.

Other types of fraud can also occur. This may include fraud which occurs at the time of the transaction such as when a fraudster steals the identity of a victim and uses it to apply for new accounts such as credit card or bank accounts. Also, fraudsters may sometimes compromise the credentials of good customers and use these compromised credentials to access credit and/or accounts that the customers have created with an institution. This might occur by way of a fraudster obtaining login and password information for an actual customer and using that to perform fraudulent transactions.

Even when there is no financial component to a transaction, negative consequences can still result if one of the participants is not who they say they are. For example, businesses may offer other types of online services which provide access to data, access to sensitive systems or resources or the ability to conduct non-financial transactions impacting the operation of the business. It is necessary to do whatever is possible to ensure that the person, entity or machine seeking to conduct these types of interactions are who they say they are and that their purported activity is not fraudulent.

In addition, it is important to verify the identities that are seeking to transact within the broader financial ecosystem, not just for the institution in question, but for downstream institutions. For example, synthetic identities are often "bred" in one institution, to establish a strong credit bureau profile, and create a sense of trust. These accounts will later "bust out" and cause massive losses for other companies, unrelated to that first "breeder" company.

A related but separate issue in connection with decision making as to whether or not a transaction should be permitted to proceed is the risk of fraud. Fraud detection techniques may also include assessment of transaction data as against known sources of fraud such as email addresses, devices, physical addresses, names, IP addresses, blacklists, watchlists and the like.

Various fraud detection and identity verification methodologies and related systems for implementing the same exist. While these offerings are generally helpful and effective, there exists a need for novel approaches to the problem of verifying identities and preventing fraud in connection with online activities.

One key deficiency in existing systems and methodologies relates to the timeliness of the information available which can be used to guide decisions on the possibility of fraud and or stolen identities. In many cases, by the time a fraudster's activities are identified, reflected in available data and then actually available for use by the systems, the fraudulent activities may already be completed. For example, a fraudster may begin attempting to conduct fraudulent activities on a series of banking applications and then move on to e-commerce sites after that. In existing systems, it is extremely unlikely that the available data resulting from the fraudulent transactions in the banking industry will be available to prevent ongoing attempted transactions among various ecommerce sites.

In connection with identity verification in particular, various regulatory schemes exist under which transaction processors and other regulated entities must comply with specific requirements associated with potential transactions. One such regulatory framework is often referred to as know your customer (KYC). The KYC requirements dictate that financial institutions must verify consumer identities before allowing potential customers to engage in most financial transactions. These policies and requirements have generally been expanding both in the United States and globally. They are designed to address corruption, terrorist financing, money laundering and various other financial crimes.

KYC policies and requirements have become an important tool for financial institutions to prevent illegal transactions and to perform identity verification. Typically, KYC procedures require the financial institution to collect some basic personal information about their customer such as name, social security number, date of birth and/or residential address. Once this data is collected, it can be compared against lists of individuals known for corruption, individuals subject to sanctions and individuals known to be at high risk for committing financial crimes. In addition, the submitted data can be checked for internal consistency between its various elements. Based on these checks and others, the financial institution can then apply its own risk assessment metrics to the results to determine if the customer should be permitted to establish a relationship with the company and/or if a specific transaction should proceed.

In addition to assessment of potential for fraud and KYC, there may exist other requirements associated with determining whether a transaction or other action should be permitted to proceed. Examples include document verification requirements which may be implemented to determine if a proffered document is authentic. In this case, the determination may be used in connection with accepting or not accepting the document in its own right or, alternatively, the document verification step may be a component of a broader verification or authentication process.

Various governmental laws and regulations may exist which require specific assessments in connection with specific requested transactions. For example, certain financial transactions that exceed a threshold amount may require confirmation that the entity/individual seeking to initiate the transaction is not on a blacklist. Various blacklists exist and may be supplied by government agencies and/or commercial entities.

In traditional approaches associated with the above noted assessments, static databases are typically used. However, these approaches suffer from a number of drawbacks. For one, the voluminous data sets that make up the models used to assess potential fraud and/or false identities require frequent and often difficult to formulate updates to remain effective. In other words, in a static database system, these updates may require manual intervention as updated data arrives, and there is often a lag between the time that new data is acquired and the time that it is able to be formulated for a model framework that can be used to make KYC and/or fraud assessments. This lag often results in a model framework that is stale and that thus produces undesirable outcomes, such as inaccurate and error-prone identity verification and/or fraud results which drive bad decision making in terms of which transactions should be permitted and which should not. To recap, traditional modeling using static databases can be extremely difficult to design for voluminous sets of constituent (i.e., integral) data in such a timely manner as would permit appropriate decisionmaking to be obtained. As can be appreciated, such difficulty can be, for such voluminous data, rooted in first determining whether received data ought to be used for future modeling, whether past data ought to be retained for that modeling, etc. In sum, the discussed prior modeling can fail to accurately identify both (a) which data ought to be prospectively used for assessments and (b) how to use applicable data reliably and efficiently to produce accurate assessments (as may be measured against past results for transactions).

From the perspective of those entities providing decision support, there exist other drawbacks associated with the current state of the art. For example, use of and access to third party data sources can be expensive. In addition, with little to no control over the frequency of updates, data content and data formats, these entities are put in the position of being subject to data sourcing which may not be ideal for the solution offered by these entities. US 2020/0184488 A1 discloses a framework for generating risk evaluation models, wherein transaction records are retrieved from a database, enriched with additional data from related transactions, and serialized into a flat data structure. A model generation module utilizes this serialized data to efficiently derive and test features for configuring a machine learning model, thereby reducing the latency associated with repeated database queries during the model development phase.

### SUMMARY OF THE INVENTION

A first aspect of the invention is a system configured to generate fraud scores as defined in claim 1. A second aspect of the invention is a method of generating fraud scores as defined in claim 7.

In some embodiments of the present invention, the provided feature engine employs data obtained from previous transactions including information comprising "feedback" data which reflects later knowledge of whether a transaction actually was fraudulent (or whether the person initiating the transaction was actually who they said they were) to generate a set of features which are used in assessing whether newly proposed transactions should be permitted to proceed.

In some embodiments of the present invention, the provided feature engine employs data obtained from previous transactions including information, or information about items such as IP address, email addresses, names of individuals, phone numbers, physical addresses, device IP addresses, individual demographic information and other related information to create feature sets which are mapped against data associated with a proposed transaction to assess whether or not the transaction is at risk of being fraudulent or should otherwise not be permitted to proceed for other reasons.

The system and methodology of the present invention operate, in one embodiment, to provide a cloud-based application through which an external system can make calls/requests, such as through APIs or other machine-to-machine protocols, for risk assessments as to fraud, KYC, document validity and other related assessments based on information provided in connection with the calls/requests. In preferred embodiments, the information provided to the system of the present invention when calls are made may include personal information or information or attributes such as the user's name, physical address, social security number, date of birth and/or other information. Also, in preferred embodiments, the system of the present invention may return one or more scores which are used by the calling system to make decisions as to proposed transactions, such as whether or not to permit the opening of a new credit card account. Reason codes may also be returned to the calling system. These reason codes further quantify the basis for the scores generated by the system of the present invention as more fully described herein.

### BRIEF DESCRIPTION OF THE DRAWINGS

**Figure 1** is a diagram depicting the major components of the system of the present invention, including various elements with which the system of the present invention may interact, in preferred embodiments thereof;
**Figure 2** is a data flow diagram illustrating the high level aspects of fraud assessment request processing in one embodiment of the present invention;
**Figure 3** is a view of an exemplary data set including a set of previously processed transactions used in developing a feature on the one hand and a proposed transaction against which the feature is applied in one embodiment of the present invention;
**Figure 4** is a diagram illustrating a proposed transaction and the application of a previously created feature set as against the proposed transaction in connection with a fraud assessment according to the teachings of the present invention in a preferred embodiment thereof; and
**Figure 5** is a flowchart describing the key steps involved in the process of creating feature sets and applying those feature sets as against a proposed transaction in order to make a fraud risk assessment according to the teachings of the present invention in preferred embodiments thereof.

### DETAILED DESCRIPTION OF THE INVENTION

The present disclosure will now be described in terms of various exemplary embodiments. This specification discloses one or more embodiments that incorporate features of the present embodiments. The embodiment(s) described, and references in the specification to "one embodiment", "an embodiment", "an example embodiment", etc., indicate that the embodiment(s) described may include a particular feature, structure or characteristic. Such phrases are not necessarily referring to the same embodiment. The skilled artisan will appreciate that a particular feature, structure or characteristic described in connection with one embodiment is not necessarily limited to that embodiment but typically has relevance and applicability to one or more other embodiments.

In the several figures, like reference numerals may be used for like elements having like functions even in different drawings. The embodiments described, and their detailed construction and elements, are merely provided to assist in a comprehensive understanding of the present embodiments. Thus, the present embodiments can be carried out in a variety of ways and do not require any of the specific features described herein. Also, well-known functions or constructions are not described in detail since they would obscure the present embodiments with unnecessary detail.

The description is not to be taken in a limiting sense but is made merely for the purpose of illustrating the general principles of the present embodiments, since the scope of the present embodiments are best defined by the appended claims.

It should also be noted that in some alternative implementations, the blocks in a flowchart, the communications in a sequence-diagram, the states in a state-diagram, etc., may occur out of the orders illustrated in the figures. That is, the illustrated orders of the blocks/communications/states are not intended to be limiting. Rather, the illustrated blocks/communications/states may be reordered into any suitable order, and some of the blocks/communications/states could occur simultaneously.

All definitions herein should be understood to control over dictionary definitions, definitions in documents incorporated by reference, and/or ordinary meanings of the defined terms.

The indefinite articles "a" and "an," as used herein and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of' "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

It will be understood that, although the terms "first", "second", etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items. As used herein, the singular forms "a", "an" and "the" are intended to include the plural forms as well, unless the context clearly indicates otherwise.

The word "exemplary" is used herein to mean "serving as an example, instance, or illustration." Any embodiment described herein as "exemplary" is not necessarily to be construed as preferred or advantageous over other embodiments. Additionally, all embodiments described herein should be considered exemplary unless otherwise stated.

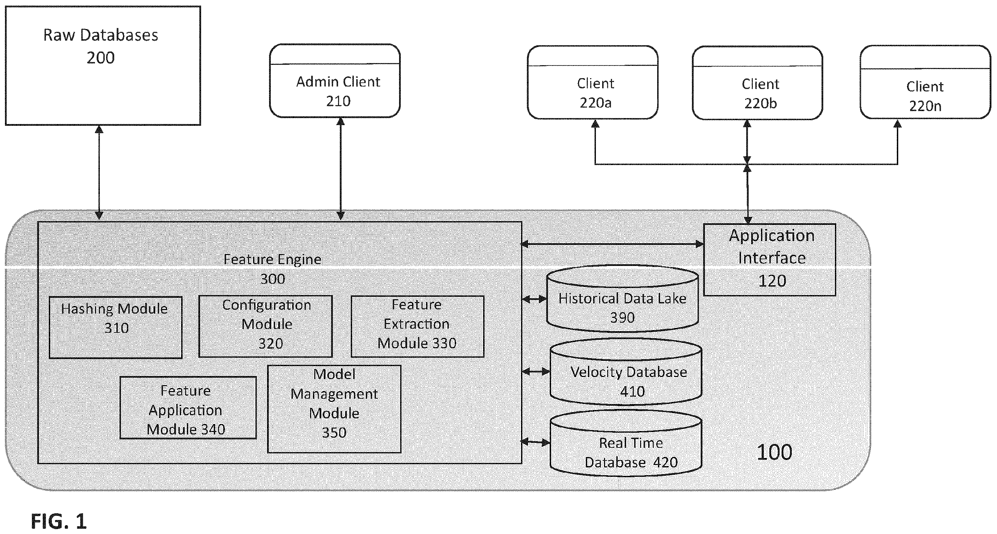

With reference now to Fig. 1, the system of the present invention, in one preferred embodiment thereof, is now described. According to this preferred embodiment, feature engine assessment system (FEAS) 100 resides on a single cloud-based server, although it is also possible for various components of FEAS 100 (as described herein) to reside on separate servers. By way of example, FEAS 100 may be a computer-implemented application which resides on a computing server.

FEAS 100 preferably includes feature engine (FE) 300, which itself is comprised of a number of modules as discussed further herein. FE 300 operates to generate scores associated with fraud determinations based on received input. These scores are generated in response to requests originating from clients 220a, 220b, ... 220n. FEAS 100 may be accessed through the internet, or any other private or public network, by one or more clients 220. Although the following description is in the context of receiving data associated with a proposed transaction and generating a score reflecting risk of fraud, it will be readily apparent to one of ordinary skill in the art that the teachings of the present invention may also be applied to many other related assessments such as identity verification, document verification, KYC and others.

Each of clients 220 may be personal computers, laptops, handheld computing devices (such as smartphones or tablets) or any other device capable of providing the required connectivity and display. In some embodiments, client 220 may be a computing application operated by a customer which requires identity verification guidance to process transaction requests. For example, client 220 may be an application or set of applications operated by a financial institution which processes requests for new account openings and/or for new credit cards made by customers of that financial institution.

Clients 220 interact with FEAS 100 such that data may be communicated between them via application interface 120 and such that FEAS 100 may process fraud score requests made by clients 220. Application interface 120 may comprise one or more application programming interfaces (APIs) that permit applications associated with client 220 to communicate with FEAS 100.

Also shown in Fig. 1 is admin client 210. Admin client 210 may comprise personal computers, laptops, handheld computing devices (such as smartphones or tablets) or any other similar device. Admin client 210 functions to allow users to configure, maintain and support the operation of FEAS 100. For example, a user may use admin client 210 to interact with FEAS 100 to set parameters regarding which specific features from the universe of feature sets should be used in processing assessments and/or parameters regarding the timing of updates to the available feature sets, as discussed in further detail below.

Raw databases 200 may also be present according to the teachings of the present invention. Raw databases 200 may comprise one or more external databases, data sets, systems, applications, rules bases and/or other sources of data which are used by FEAS 100 to generate fraud scores as further described herein. By way of example, raw databases 200 may comprise credit reporting databases, demographic databases, reported and known fraud data, financial transaction data, physical address data, phone data, credit inquiry data, date-of-birth information, utility data and marketing data as well as other sources of data useful to FEAS 100 in supplementing the feature set aspects of the present invention so as to generate the most accurate fraud scores as described more fully herein. More details on the types of data and related databases which may be available to FEAS 100 are provided below. As noted above, and in preferred embodiments, raw databases 200 may be third-party applications which periodically provide identity related data to FEAS 100 for optimizing fraud scores. This data may be in formats and frequencies as may be determined by the third-party vendors, the operator of FEAS 100 or both.

Returning now to the specific components of FEAS 100, FEAS 100 may include various components for generating fraud scores which are used to make decisions on whether transactions should be permitted to occur. As noted above, the novel components and processes described are described in the context of generating fraud scores in response to information obtained in connection with a proposed transaction. It will be clear to one of skill in the art that the generation and use of feature sets as described herein may also be applied to the generation of scores and binary determinations which reflect assessments other than just fraud. For example, these same components and processes generally, and the creation and usage of feature sets as described herein may also be applied to identity verification, document verification and many other decision support scenarios where decision support is provided with respect to proposed transactions.

In one embodiment of the present invention, the components comprising FEAS 100 may include application interface 120 (described above), velocity database 410, real time database 420, historical data lake 390 and the various components of FE 300. Each of these components and their associated functionality are more fully described below.

FEAS 100 may reside on one or more physical servers. These servers may include electronic storage, one or more processors, and/or other components. The servers may also include communication lines or ports to enable the exchange of information with a network and/or other computing platforms. The servers may include a plurality of hardware, software and/or firmware components operating together to provide the functionality attributed herein to FEAS 100.

Electronic storage associated with the servers may comprise non-transitory storage media that electronically stores information. The electronic storage media of electronic storage may include system storage that is provided integrally (i.e., substantially non-removable) with servers and/or removable storage that is removably connectable to the servers via, for example, a port or drive.

Electronic storage may include one or more of optically readable storage media (e.g., optical disks, etc.), magnetically readable storage media (e.g., magnetic tape, magnetic hard drive, floppy drive, etc.), electrical-charge-based storage media (e.g., EEPROM, RAM, etc.), solid-state storage media (e.g., flash drive, etc.) and/or other electronically readable storage media. Electronic storage may include one or more virtual storage resources (e.g., cloud storage, a virtual private network and/or other virtual storage resources). Electronic storage may store software algorithms, information determined by processors, information received from servers, information received from clients 220 and/or other information that enables the servers to function as described herein.

While an exemplary architecture is described above, it will readily be understood by one of skill in the art that an unlimited number of architectures and computing environments are possible while still remaining within the scope and spirit of the present invention.

Returning now to the specific components of FEAS 100 shown in Fig. 1, FE 300 includes various modules which are now generally described. The operation of each of these modules will be described in further detail below. In a preferred embodiment of the present invention, hashing module 310 performs two unique functions. First, it cleanses identity data received from raw databases 200 such that the applicable identity data is normalized and placed in a format that the system can use to construct and update the fraud assessment models from time to time. This is important since raw databases 200 may be structured in disparate ways with different formatting of the various data fields in identity data records. Through this normalization process, FEAS 100 is able to ensure that all data sourced from raw databases 200 is in the same format. Note that these models are separate and apart from the feature sets generated and used by feature engine 300 to generate fraud scores. In preferred embodiments, these other fraud assessment models may be used in combination with the feature sets and related processing to further improve the accuracy of fraud scores generated by FEAS 100.

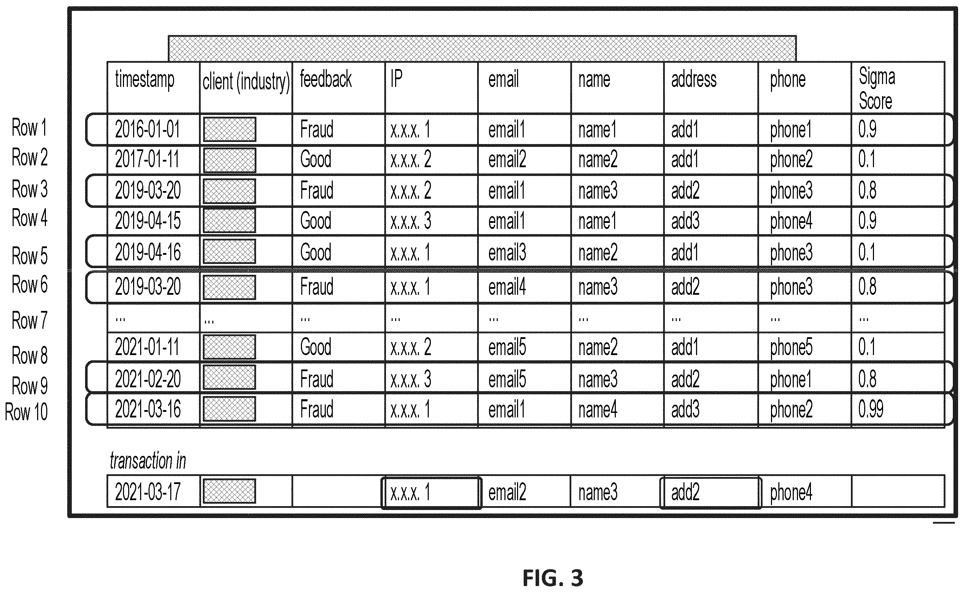

Second, hashing module 310 also functions to hash data associated with transactions which are received and processed by FEAS 100. As noted above, these previously processed transactions are used by FEAS 100 and in particular, feature engine 300 to create feature sets which are used to improve the accuracy of fraud assessments. Examples of such transactions as hashed by hashing module 310 are shown in Fig. 3. In some embodiments, the historical data associated with previously processed transactions is stored in historical data lake 390 in either or both hashed or unhashed formats. In preferred embodiments, transaction data is anonymized such that individual transaction records can not be recognized with respect to a particular individual in connection with the processing undertaken by feature engine 300.

Another component of feature engine 300 is configuration module 320. This module works in connection with admin client 210 to configure feature engine functionality as desired. Examples of configurable parameters which may be controlled and set by configuration module 320 include how and which features from the universe of feature sets is used by feature engine 300, how often feature set databases are updated, the specific aspects of features to be generated and how features are applied to transactions to assess the likelihood of a proposed transaction being fraudulent. Other parameters are also configurable as discussed herein and as would be apparent to one of skill in the art.

Feature extraction module 330 functions to generate feature sets as more fully described below. This generation is subject to the specific parameters set via configuration module 320. The frequency and time frames for the invocation of a new feature set generation may be configured according to various parameters. For example, feature engine 300 may be configured to generate a new feature set once per day at 9am. The newly generated feature set is stored in velocity database 410. In some embodiments, some types of features may be generated more frequently than the time frame parameter mentioned above. In this case, "real time" or near "real time" feature set generation may occur as new transactions are received and processed and features generated based on these new transactions may be stored in real time database 420. Feature set generation frequency is dependent upon a number of variables including available resources (such as storage and processing power limitations) as well as other factors influencing the level of benefit achieved by doing more frequent feature set updates (such as industry, prevalence of fraudulent activity, customer requirements and others).

With reference to the foregoing, one example may be that feature extraction module 330 is invoked one time per day (e.g. 9am) to generate a new universe of feature sets which are stored in velocity database 410. In this same example, specific types of features may be generated once every hour during the day based on new transactions being received and processed. These specific features supplement the feature set used by feature engine 300 and are stored in real time database 420.

In an alternative embodiment, feature engine 300 may implement a parallel process that evaluates variable constructions in an automated way on a periodic (e.g. daily) basis. Based on changing fraud patterns, updated models with different variable sets may be created after exhaustively searching the variable space. Illustrative steps may include partitioning the space of variables (i.e. separating individual variables into individual feature set databases) so as to make the process more efficient, measuring the predictiveness of a very large set of variables and culling variables iteratively, until a final set of the most optimal features is generated. At this point, the generated features can be fed into a model, which can be used as a champion/challenger as against the current model. If the challenger is sufficiently better than the champion, then it can become the new model feature set.

Yet another component of feature engine 300 is feature application module 340. This component functions to apply some or all of the collective features available in either or both of velocity database 410 and/or real time database 420 to an incoming proposed transaction to generate a fraud assessment which can be reported via application interface 120 to one or more clients 220 requesting such a fraud assessment based on a proposed transaction. The operation of feature application module 340 is discussed in greater detail below.

Model management module 350 component of feature engine 300 functions to control the overall model used in making fraud assessments based upon a newly received transaction. This module thus may determine whether the feature sets available for use by FEAS 100 are used in the fraud assessment process and if so, which feature sets. Alternatively, model management module may dictate that feature sets will not be used in the process of fraud assessment (i.e. fraud assessment models other than the feature sets which are the primary focus of the present invention will be used in place of the feature sets). It is also possible, in some embodiments, for both the feature sets and the other models to be used in combination to generate fraud assessments as more fully described herein. In some embodiments, model management module 350 is configured by a user via admin client 210 such that the user can determine the specific models/feature sets to be used in making fraud determination assessments.

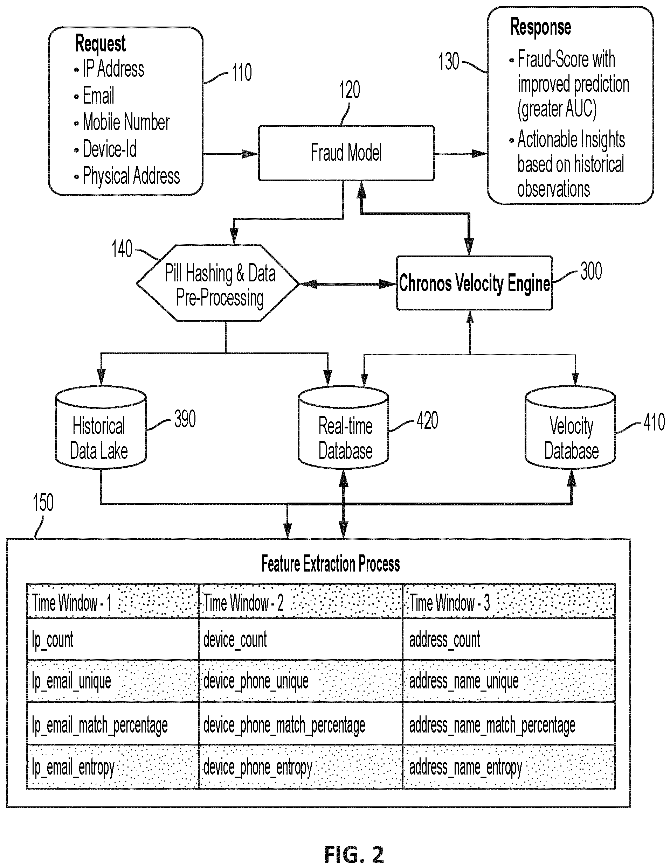

With reference now to Fig. 2, the architecture of the system and the related high level process of the present invention in a preferred embodiment is described and discussed. Block 110 illustrates an exemplary request for fraud assessment which may be received by FEAS 100. Various data associated with the proposed transaction may be provided by the requester including, in this case, IP address, email address, mobile number, device ID and physical address. Other and/or different data may be provided as will be readily apparent to one of skill in the art. This data is fed into fraud model 120. As discussed above, fraud model 120 may comprise processing which does not employ the feature engine feature sets of the present invention. In this case, other data models are used which primarily involves the mapping of data available from third parties via raw databases 200 against the proposed transaction to provide a fraud assessment response 130.

Alternatively, if the novel feature engine feature sets are used in connection with the fraud assessment, the fraud model 120 will include processing involving the elements below the fraud model block 120 in Fig. 2. In this case, pre-hashing and data pre-processing of raw data and/or previous transaction data is first undertaken via block 140. This may include formatting/cleaning the data in a consistent form and/or hashing data according to a mapping that makes the original form of the data unavailable and unable to be reconstructed.

In preferred embodiments, the hashed and pre-processed data is stored in historical data lake 390. Once this is complete, feature engine 300 extracts features as part of the feature extraction process 150 and stores these feature sets in both real time database 420 and velocity database 410. As noted above, velocity database 410 generally contains feature sets which are extracted on a periodic basis, preferably at times when computing resources are best available to implement the significant processing when large amounts of data and/or features are involved. In contrast to that, real-time database 420 may typically include smaller universes of feature sets based on incoming transaction data which is used on a more frequent basis to generate additional, more immediate feature sets. Both or either of these classes of feature sets may be used by feature engine 300.

As shown in Fig. 2 and more specifically in the feature extraction block 150 therein, an example of feature extraction based on previously processed transactions is presented. In this example, a time window is selected for the universe of variables to be processed. For example, in the first column, time window = 1 may be, for example, a thirty day period. Of course any time frame may be used depending upon the desired configuration. In this case, each of the four variables ("ip_count", "ip_email_unique", "ip_email_match_percentage", and "ip_email_entropy") are selected with respect to the applicable time period. As such, the variable "ip_count", indicative of the number of total IP addresses received based on transactions over the last 30 days would be extracted. This could mean a count of IP addresses over the whole universe of transactions processed by FEAS 100 during the past thirty days or it could be some subset of that universe such as only IP addresses seen in connection with transactions for a certain client (e.g. Acme Bank), only IP addresses seen in connection with a certain industry (e.g. all banking clients using FEAS 100), only IP addresses seen in connection with certain geographical areas (e.g. United States only) etc. An almost unlimited set of possibilities for these types of subsets of data exists as will be readily apparent to one of skill in the art.

The other exemplary variables referenced in extraction block 150 are as follows:
- Ip_email_unique: The count of different email addresses seen associated with the IP address associated with the current transaction
- Ip_email_match: For the given IP address & email pair, has that pair been observed in the given time window?
- Device_count: The count of distinct device observations, where the device fingerprint matches the fingerprint for the current transaction.
- Device_phone_unique: The count of unique phone #s associated with devices whose device fingerprint matches the current device fingerprint
- Device_phone_match: For the given device fingerprint & phone pair, has that pair been observed in the given time window.Address_count: How many times has this address been seen?
- Address_name_unique: The count of different names seen associated with the address associated with the current transaction
- Address_name_match: For the given address & name pair, has that pair been observed in the given time window?

As will be readily appreciated by one of skill in the art, there exist many other variables which can be used in connection with the teachings of the present invention in order to improve the accuracy of fraud assessments and other decision support capabilities according to the teachings of the present invention, in preferred embodiments thereof. Also, different variables can be extracted according to differing time windows and differing subsets of the universe of transactions as described above. As these features are extracted, they are stored in velocity data base 410 (periodic updates at predetermined times) and/or real time database 420 (more frequent feature extractions as transactions arrive into FEAS 100 during the day).

Based on the above process, which preferably includes the extraction and use of feature sets via feature engine 300 as inputs to the overall fraud model 120, a response 130 which may comprise an improved fraud assessment score may be reported back to a client 220. In preferred embodiments, this fraud score will be more accurate based on the teachings of the present invention which include the use of feature sets extracted from and based on previous transaction data. In preferred embodiments, this fraud score will also provide actionable insights to the requestor which allows for an informed decision making capability as to the proposed transaction.

With reference now to Fig. 3, an exemplary set of "previous" transaction data is provided in the top ten rows with a new "proposed" transaction shown in the bottom row. In this example, data associated with each previous transaction has preferably been hashed and includes at least the following data fields: timestamp (date the transaction was process for fraud assessment by FEAS 100), client or industry (the specific client name requesting the assessment and/or the industry to which that client belongs), feedback (whether the transaction ultimately was determined to be valid or fraudulent), IP address from which the transaction was submitted, email address from which the transaction was submitted, name of the person submitting the transaction/application, physical address of the person submitting the transaction/application, phone number of the person submitting the transaction/application and sigma score previously determined by FEAS 100 when the transaction was originally submitted (higher sigma number being indicative of a higher risk of fraud).

In this example, a set of features including IP address and physical address has been extracted. Using the IP address and physical address as exemplary features for matching, it can be seen that the transactions represented by rows 1, 3, 5, 6, 9 and 10 share matching data with that of the proposed transaction. In other words, row 1, 5, 6 and 10 show that these previous transactions were initiated from the same IP address (x.x.x.1) as that of the proposed transaction. Similarly, rows 3, 6 and 9 represent transactions that were initiated from the same physical address as that of the proposed transaction.

As will be discussed in more detail below, previous transactions sharing at least one data element (e.g. IP address, physical address) are used in connection with the novel process of the present invention to increase the accuracy of fraud and other predictions regarding proposed transactions. For example, using the data in Fig. 3 (although in practice a data universe much larger than that of the ten rows in the Fig. 3 example would be used), it could be discovered that it is likely that IP address x.x.x.1 is associated with physical address add1 given the indication that the previous transaction in row 5 turned out to be non-fraudulent whereas combinations of IP address x.x.x.1 with other physical addresses (such as add2) are more likely to be fraudulent. In this case, because the proposed transaction combines IP address x.x.x.1 with physical address add2, this proposed transaction may be identified, using feature engine 300 and the related novel process of the present invention, as likely to be fraudulent.

As noted above, the assessments made using the extracted features contained in velocity database 410 may be used in and of themselves to generate fraud scores, or, alternatively, the extracted features and use thereof may be combined with other assessment methodologies such as using available data in third party databases (e.g. raw databases 200) to make an overall assessment.

The novel feature extraction and application aspects of the present invention may be used in a variety of different ways as explained in more detail below. For example, a count associated with a specific mailing address used in connection with previous transactions may be extracted as a feature over a specified time window. In one example, this count might be 40 instances of the use of that mailing address in connection with transactions initiated by Acme Bank over a 30 day window in the past. When a new proposed transaction is received by FEAS 100 with that same mailing address, the extracted mailing address feature for that specific mailing address may be used to assess the likelihood of fraud according to the teachings of the present invention.

Since it is unlikely that a single mailing address would make 40 legitimate applications to Acme Bank over a 30 day period, this mailing address, and thus the proposed transaction including this mailing address would more than likely be identified as a transaction with a high likelihood of being fraudulent. This same logic can be employed by FEAS 100 with any demographic element to assess the likelihood of fraud in connection with an incoming proposed transaction. By way of example, feature extraction for features such as IP address, phone number, last name, social security number, birth date, email address and many other elements can be used as above to identify and extract features which reflect unusual previous activity as a predictor of potential fraud associated with a new proposed transaction incorporating that same demographic element. This process of using a single feature for assessment is generally referred to herein as "single-key feature" application.

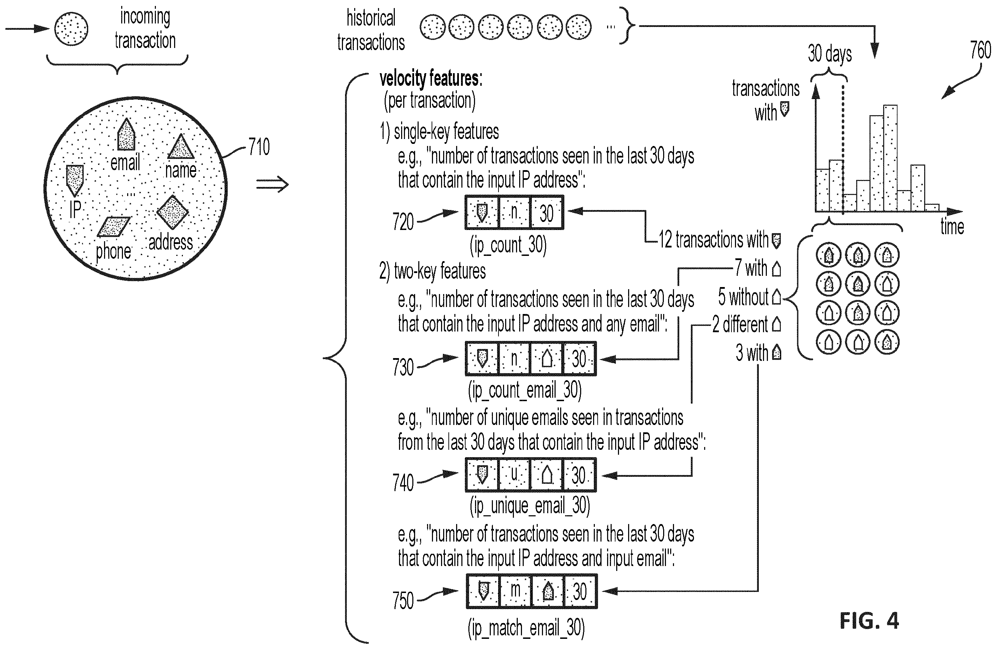

Turning now to Fig. 4, a more detailed discussion of the application of extracted features to incoming proposed transactions, in accordance with preferred embodiments of the present invention, is provided. As opposed to prior art solutions where risk attributes existing in data stores are used to create a model that is not dependent on a time frame, the present invention utilizes a novel process whereby features reflecting various factors as they occur during some past time period are used to facilitate a comparison as against the related factors in a currently proposed transaction. In other words, the present invention assembles feature sets which reflect transaction characteristics as they have occurred in past time windows, as such time windows are determined based on the discussion above, so that they can be compared and measured against one or more features of a proposed transaction. This is merely one novel aspect of the present invention.

By way of example and as will be explained in more detail below, the novel process of the present invention might develop and employ a feature set that answers the question - "For the credit card applications from the mailing address that is currently applying for this credit card, what is the unique count of social security numbers (SSNs) in the last seven day period?" It would be unusual for a large number of people, each with a different SSN to apply for the credit card from the same mailing address (presuming it is a typical residential home) within a short period of time. For example, if the SSN count for the applicable mailing address over the previous seven day period was 35, that would be indicative of likely fraud for the presently proposed credit application using the keyed mailing address. This factor can be combined with other features in a machine learning model to provide an overall risk assessment for the proposed transaction.

According to preferred embodiments of the present invention features are developed by first selecting a match key. In the above example, which is an example of a two key feature, the match key would be the mailing address. Secondly, an operation is selected to apply to the feature. In the above example, this would be a COUNT. Taking the second key into account, the COUNT is applied to the second feature resulting in a COUNT of SSNs associated with the keyed mailing address. Finally, a time window is applied to the COUNT operation meaning that the system looks for the COUNT of SSNs associated with the mailing address key based on historical transactions with a processing date in the past seven days. Any or all of the characteristics of the features can be selected/varied to generate other and supplemental extracted features which can be selectively applied against incoming proposed transactions as they are received by FEAS 100.

With specific reference now to Fig. 4, an example of an incoming proposed transaction along with a number of velocity features is provided along with the following discussion of how these features may be applied as against the incoming transaction to provide input into a risk assessment determination. In this case, incoming transaction 710 includes an IP address (IP), email address, name, phone number and mailing address. Incoming transaction may be, for example, a credit card application being made via the Acme Bank website. The data associated with incoming transaction may be passed from client 220 via application interface 120 to feature engine for processing. An exemplary set of features (720, 730, 740 and 750) may be applied as against incoming transaction 710 to provide an assessment as to the likelihood of fraud associated with incoming transaction 710. These features are stored in velocity database 410 and/or real time database 420. The features applied, as shown in the Fig. 4 example are as follows:
1) Feature 720 - this is a single key feature representing the number (COUNT) of incoming transactions in the last 30 days which include the same IP address as the one in incoming transaction 710. In preferred embodiments of the present invention, this feature might be available in velocity database 410 for each and every IP address included in any historical transaction in the past x days. Depending on storage resources and configuration selections, the feature could reflect transactions going back quite some time. This is demonstrated by the bar chart 760 shown in Fig. 4. For example, velocity database may store features for every IP address seen in previous transactions going back, for example, for 5 years. Then, based on system configuration, features representing many different time windows could be made available to and used by feature engine 300 to generate fraud scores (e.g. COUNT of IP address x.x.x.1 in historical transactions over the last 1 day, 7 days, 30 days, 6 months, 1 year, 5 years, etc.). By way of example, if feature 720 reflects a large COUNT (e.g. 500) of transactions coming from the same IP address over the past 30 days, it may be indicative that incoming transaction 710 could be fraudulent.
2) Feature 730 - this is a two key feature representing the COUNT of transactions seen in the past thirty days that includes the same IP address as incoming transaction 710 and ANY email address. This feature may also be used to assess the likelihood that incoming transaction 710 is fraudulent. The assessment may be based on human developed models that reflect the correlation between different COUNT levels for this feature and actual levels of fraud for transactions associated with this feature. Alternatively and/or in addition, the models may be developed and refined over time using machine learning techniques that continually monitor and improve models as new historical data and/or feedback data is made available to FEAS 100.
3) Feature 740 - this is another two key feature representing the number of unique emails (UNIQUE) seen in historical transactions over the past 30 days wherein the same IP address as that in incoming transaction 710 is present. Again, this feature may be used as yet another input to the overall model for developing a fraud score for incoming transaction 710. In this case, a high UNIQUE value may be indicative of a higher fraud risk because it would be unlikely that the same IP address would be used to make credit applications with a great many email addresses.
4) Feature 750 - this is another two key feature representing an "IP_Match_Email" value which looks at transactions over the past 30 days and then determines the number of transactions with both the IP address and email address used in connection with incoming transaction 710. This feature may be used to assess the likelihood of fraud wherein a lower IP_Match_Email value could be indicative of potential fraud. For example, if only a small number of the transactions associated with the specific IP address also contain the specific email address associated with incoming transaction 710, incoming transaction 710 could likely be fraudulent since it is an outlier email address for that IP address. As will be apparent to one of skill in the art, any or all of these features can be configured to correlate to higher or lower fraud score input values based on human input and or learnings via machine learning techniques as discussed herein.

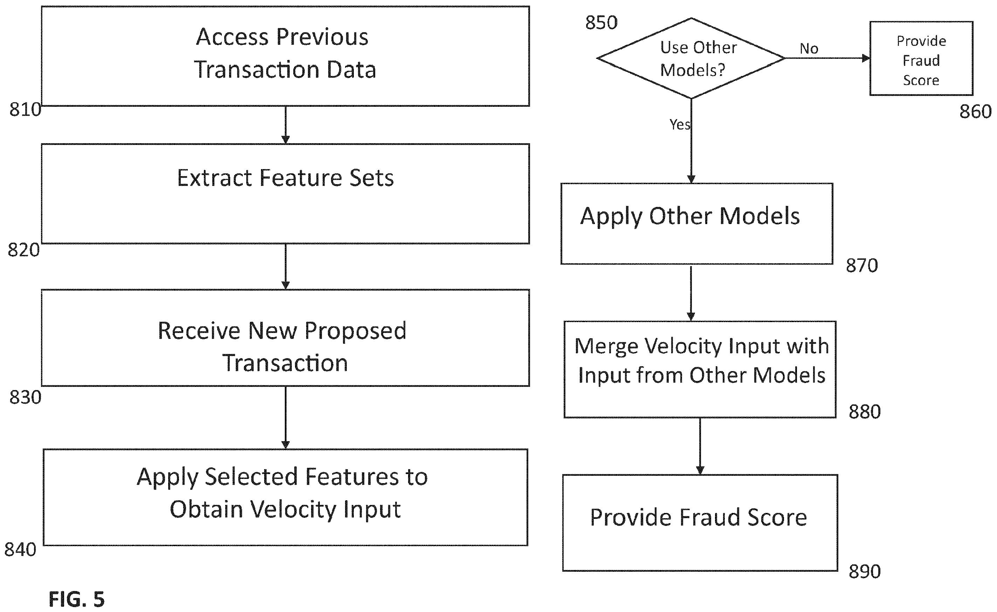

Turning now to Fig. 5, a flowchart describing the steps in the process of generating features and applying them as incoming transactions are presented according to the teachings of the present invention, is provided. At step 810, previous transaction data which has been preferably hashed by hashing module 310 is accessed by feature engine 300. Access at step 810 in order to extract feature sets at step 820 may occur on a periodic schedule as discussed above. For example, previous transaction data stored in historical data lake 390 may be accessed one time per day (e.g. at an expected low use time such as 2 am) to extract feature sets which are stored in velocity database 410. In addition to that, more frequent feature extractions at step 820 may also occur during the day as additional transactions are processed and stored in historical data lake 390. The features extracted on this more frequent schedule (e.g. one time per hour during the business day) may be stored in real time database 420.

One important aspect of the present invention and specifically the process of the present invention in one embodiment thereof, is the ability for the system to rapidly and robustly adapt to ongoing fraudulent activity in real time. This is accomplished in connection with the availability of feature sets which are contained in real time database 420 for use by feature application module 340. In particular, as fraudulent activity is detected, feature sets reflecting that activity (e.g. a commonly used fake SS#) can be rapidly generated, stored in real time database 420, and made available to feature application module 340 in real time.

This provides unique benefits in that activity detected may be used across clients and industries to inform decisions with respect to identity, fraud and other factors associated with proposed transactions and other activities. So, for example, if a banking customer of an operator using system 100 is seeing fraudulent activity, those activities can be reflected in generated feature sets contained in real time database 420 and used in connection with all other proposed transactions which are processed by system 100 on a real time or near real time basis regardless of industry or any other customer classification. This is extremely powerful in enhancing the accuracy of scoring particularly with the ability to process this data for a large number of features.

Feature sets are extracted at step 820 under the control of feature extraction module 330 according to the teachings of the present invention as described above. A complete universe of features may be extracted to include every selected data element and all possible values of that element or, more realistically, some subset of that complete universe. The determination as to which features to extract may be made via admin client 210 under the control of configuration module 320 and/or as feature engine 300 learns via machine learning techniques which features are the most effective at assessing fraud risk.

By way of example, and in connection with feature set extraction at step 820, all IP addresses associated with all available previous transactions over the past one year could be extracted as available features so that a COUNT of IP addresses would be available for any time frame up to one year (e.g. previous 1 hour, previous 1 day, previous 5 days, previous month, from February through April, etc.). Other data elements can be also be extracted over selected time frames such that the feature extraction techniques described above can occur including one key, two key and even more complex combinations of data elements (e.g. how many transactions with the same IP address, same last name, same mailing address and same phone number as those contained in the proposed transaction.)

Next at step 830, a new proposed transaction is received and the data elements are used in connection with selected features sets at step 840 to obtain a velocity input value which, in some embodiments is a fraud score value associated with a sigma value ranging from 0 to 100. At step 850, FEAS 100 will determine, based on configuration, whether other models (such as prior art static models using third party data only) should be combined with the velocity based score. If no, the fraud score is returned by FEAS 100 at step 860 to client 220 via application interface 120. If other models are to be combined with the velocity input, then these other models are applied to the proposed transaction at step 870. Once that is complete, the velocity score is combined with the score(s) from other models at step 880. This combination may be a simple average of all scores (assuming they all use the same baseline such as a sigma value ranging from 0-100) or alternatively, different weightings may be given to the various inputs obtained from the various models to include the velocity input obtained via feature engine 300. Finally, this combined fraud score is returned by FEAS 100 at step 890 to client 220 via application interface 120.

Based upon testing and in an already mature model, adding the velocity predictors of the present invention to base model predictors increased AUC values by 3.7%. The values reflect the area under the curve (AUC) of the receiver operating characteristic measure (ROC). The resulting AUC values provide an overall representation of the predictiveness of a model such that a value of 0 reflects that the model is always wrong and a value of 100 reflects that the model is always right. Using only velocity variables in place of base predictors led to a drop of 2.6%, which is still beneficial considering that there were no other data sources used in the model.

This data reflects the fact that in preferred embodiments, and based at least on this test data, velocity predictors are best used as a complement to production predictors as opposed to using only velocity predictors.

## Claims

1. A system configured to generate fraud scores, the system comprising:
one or more processors configured to execute computer program modules, and a physical storage;
a data ingestion computer program module operative to receive a current incoming proposed transaction (710) from a client participant to said current incoming proposed transaction;
a feature extraction computer program module (330) operative to process previously received proposed transactions to generate at least one extracted feature comprising at least one data element being a) contained within said previously received proposed transactions and b) measurable according to an assigned predetermined operator selected from a plurality of predetermined operators, wherein:
said at least one extracted feature comprises a result based upon said at least one data element being contained within said previously received proposed transactions as such said at least one data element appears within said previously received proposed transactions over a defined time period occurring prior to the time said data ingestion computer program module receives said current incoming proposed transaction;
a first database contained within said physical storage, said first database comprising a first set of extracted features generated by said feature extraction computer program module according to one or more of said plurality of predetermined operators, wherein said first database is a velocity database (410), wherein extracted features contained therein are generated according to a predetermined schedule dependent on an availability of computing resources;
a second database, said second database being contained within said physical storage and comprising a second set of extracted features generated by said feature extraction computer program module according to one or more of said plurality of predetermined operators, wherein said second set of extracted features are a) extracted from previously received proposed transactions which are more current than those previously received proposed transactions employed to generate said first set of extracted features and b) generated, in real-time, in response to one or more of said corresponding more current previously received transactions being determined to be fraudulent; and
a feature application computer program module (340) operative to, in real-time, apply said first and/or said second set of extracted features, as against said current incoming proposed transaction, to detect one or more features of said current incoming proposed transaction that are shared with one or more of the extracted features of said first and/or said second set of extracted features, and to generate at least one fraud score based on the sharing,
wherein each of said feature extraction computer module and said feature application computer module are included in a machine learning model (300) that generates said first and second sets of extracted features; and
wherein one or more of said first and second sets of extracted features comprise input fed to the machine learning model, the machine learning model updating said one or more first and second sets of extracted features based on feedback data, from the client participant, which reflects later knowledge of whether a transaction actually was fraudulent, and the machine learning model being subsequently adjusted, according to said feedback, to generate one or more further first and second sets of extracted features which said machine learning model invokes to generate said at least one fraud score.

2. The system of claim 1 wherein said first set of extracted features comprise single key features (720).

3. The system of claim 1 wherein said first set of extracted features comprise two-key features (730, 740, 750).

4. The system of any preceding claim wherein said at least one data element comprises an email address.

5. The system of any preceding claim wherein said at least one data element comprises an IP address.

6. The system of claim 3 wherein each of said two-key features is generated from a set of at least two data elements comprising a first data element and a second data element included within said previously received proposed transactions and wherein each of said two-key features is further generated based upon said assigned predetermined operator and a specified time frame and optionally:
wherein said assigned predetermined operator comprises a COUNT,
wherein said assigned predetermined operator comprises an entropy value, or
wherein said assigned predetermined operator comprises a percentage value reflecting the percentage of previously received proposed transactions that contain both of said first data element and said second data element.

7. A computer-implemented method of generating fraud scores, the method being implemented in a computer system comprising one or more processors configured to execute computer program modules, the method comprising the steps of:
receiving previous transaction data, said previous transaction data comprising at least one data element associated with individual persons;
extracting said previous transaction data to generate at least a pair of feature sets, each of said at least a pair of feature sets being sourced from a respectively different one of groupings of said previous transaction data, in which said groupings are temporally separated whereby at least one of the groupings of said previous transaction data is more current than another of said groupings of said previous transaction data, each of said at least a pair of features sets comprising at least one extracted feature comprising said at least one data element being a) contained within said previous transaction data and b) measurable according to an assigned predetermined operator selected from a plurality of predetermined operators, wherein a first set of extracted features, generated from a less current grouping of said previous transaction data, is generated according to a predetermined schedule dependent on an availability of computing resources, and wherein:
said at least one extracted feature comprises a result based upon said at least one data element being contained within said previous transaction data as such said at least one of said data elements appears within said previous transaction data over a defined time period;
receiving a proposed transaction (710) from a client participant to said proposed transaction;
selecting, according to said plurality of predetermined operators, said at least one extracted feature, of said at least a pair of said respective feature sets, to apply to said proposed transaction; and
applying said selected at least one extracted feature to said proposed transaction, in real-time, to detect presence of said at least one extracted feature within said proposed transaction, and generate a fraud score based on the presence,
wherein said selecting and said applying said at least one extracted feature are executed by a machine learning model (300) that selects said at least one extracted feature;
wherein said least one extracted feature sourced from said more current grouping of previous transaction data is generated, in real-time, in response to at least a portion of said more current grouping of previous transaction data being determined to be fraudulent, and
wherein one or more of said pair of feature sets comprise input fed to the machine learning model, the machine learning model updating said one or more feature sets based on feedback data, from the client participant, which reflects later knowledge of whether a transaction actually was fraudulent, and the machine learning model being subsequently adjusted, according to said feedback, to generate one or more further at least one extracted feature which said machine learning model invokes to generate said fraud score.

8. The method of claim 7 further comprising the step of applying an additional fraud model prior and merging the results of said additional fraud model to the fraud score to generate a composite fraud score.

9. The method of claim 8 or claim 8 wherein said extracted features comprise single key features (720).

10. The method of claim 7 or claim 8 wherein said extracted features comprise two-key features (730, 740, 750).

11. The method of any of claims 7 to 10 wherein said at least one data element comprises an email address.

12. The method of any of claims 7 to 11 wherein said at least one data element comprises an IP address.

13. The method of claim 10, wherein each of said two-key features is generated from a set of at least two data elements comprising a first data element and a second data element included within said previous transaction data and wherein each of said two-key features is further generated based upon said assigned predetermined operator and a specified time frame, and optionally wherein said assigned predetermined operator comprises a COUNT.

14. The method of claim 10, wherein each of said two-key features is generated from a set of at least two data elements comprising a first data element and a second data element included within said previous transaction data and wherein each of said two-key features is further generated based upon said assigned predetermined operator and a specified time frame and wherein said assigned predetermined operator comprises an entropy value, and optionally wherein said assigned predetermined operator comprises a percentage value reflecting the percentage of previously transaction data that contain both of said first data element and said second data element.

## Patentansprüche

1. System, das dazu konfiguriert ist, Betrugsbewertungen zu erzeugen, wobei das System Folgendes umfasst:
einen oder mehrere Prozessoren, die dazu konfiguriert sind, Computerprogrammmodule auszuführen, und einen physischen Speicher;
ein Datenaufnahmecomputerprogrammmodul, das bedienbar ist, um eine aktuelle eingehende vorgeschlagene Transaktion (710) von einem Kundenteilnehmer an die aktuelle eingehende vorgeschlagene Transaktion zu empfangen;
ein Merkmalsextraktionscomputerprogrammmodul (330), das bedienbar ist, um zuvor empfangene vorgeschlagene Transaktionen zu verarbeiten, um zumindest ein extrahiertes Merkmal zu erzeugen, das zumindest ein Datenelement umfasst, das a) innerhalb der zuvor empfangenen vorgeschlagenen Transaktionen enthalten ist, und b) gemäß einem zugewiesenen vorbestimmten Operator ausgewählt aus einer Vielzahl von vorbestimmten Operatoren messbar ist, wobei:
das zumindest eine extrahierte Merkmal ein Ergebnis umfasst, das darauf basiert, dass das zumindest eine Datenelement innerhalb der zuvor empfangenen vorgeschlagenen Transaktionen als solches enthalten ist, dass das zumindest eine Datenelement innerhalb der zuvor empfangenen vorgeschlagenen Transaktionen über einen definierten Zeitraum erscheint, der vor der Zeit auftritt, zu der das Datenaufnahmecomputerprogrammmodul die aktuelle eingehende vorgeschlagene Transaktion empfängt;
eine erste Datenbank, die innerhalb des physischen Speichers enthalten ist, wobei die erste Datenbank einen ersten Satz von extrahierten Merkmalen umfasst, der durch das Merkmalsextraktionscomputerprogrammmodul gemäß einem oder mehreren aus der Vielzahl von vorbestimmten Operatoren erzeugt wird, wobei die erste Datenbank eine Geschwindigkeitsdatenbank (410) ist, wobei extrahierte Merkmale, die darin enthalten sind, gemäß einem vorbestimmten Plan abhängig von einer Verfügbarkeit von Rechenressourcen erzeugt werden;
eine zweite Datenbank, wobei die zweite Datenbank innerhalb des physischen Speichers enthalten ist und einen zweiten Satz von extrahierten Merkmalen umfasst, der durch das Merkmalsextraktionscomputerprogrammmodul gemäß einem oder mehreren aus der Vielzahl von vorbestimmten Operatoren erzeugt wird, wobei der zweite Satz von extrahierten Merkmalen a) aus zuvor empfangenen vorgeschlagenen Transaktionen extrahiert wird, die aktueller als die zuvor empfangenen vorgeschlagenen Transaktionen sind, die eingesetzt werden, um den ersten Satz von extrahierten Merkmalen zu erzeugen, und b) in Echtzeit als Reaktion darauf erzeugt wird, dass eine oder mehrere der entsprechenden aktuelleren zuvor empfangenen Transaktionen als betrügerisch bestimmt werden; und
ein Merkmalsanwendungscomputerprogrammmodul (340), das bedienbar ist, um in Echtzeit den ersten und/oder den zweiten Satz von extrahierten Merkmalen im Vergleich zu der aktuellen eingehenden vorgeschlagenen Transaktion anzuwenden, um ein oder mehrere Merkmale der aktuellen eingehenden vorgeschlagenen Transaktion zu detektieren, die mit einem oder mehreren der extrahierten Merkmale des ersten und/oder des zweiten Satzes von extrahierten Merkmalen geteilt werden, und um zumindest eine Betrugsbewertung basierend auf dem Teilen zu erzeugen,
wobei jedes von dem Merkmalsextraktionscomputermodul und dem Merkmalanwendungscomputermodul in einem Maschinenlernmodell (300) enthalten ist, das den ersten und den zweiten Satz von extrahierten Merkmalen erzeugt; und
wobei einer oder mehrere von dem ersten und dem zweiten Satz von extrahierten Merkmalen Eingabe umfassen, die dem Maschinenlernmodell zugeführt wird, wobei das Maschinenlernmodell den einen oder die mehreren ersten und zweiten Sätze von extrahierten Merkmalen basierend auf Rückmeldungsdaten von dem Kundenteilnehmer aktualisiert, die späteres Wissen darüber reflektieren, ob eine Transaktion tatsächlich betrügerisch war, und das Maschinenlernmodell anschließend gemäß der Rückmeldung angepasst wird, um einen oder mehrere weitere erste und zweite Sätze von extrahierten Merkmalen zu erzeugen, die das Maschinenlernmodell aufruft, um die zumindest eine Betrugsbewertung zu erzeugen.

2. System nach Anspruch 1, wobei der erste Satz von extrahierten Merkmalen Einzelschlüsselmerkmale (720) umfasst.

3. System nach Anspruch 1, wobei der erste Satz von extrahierten Merkmalen Zwei-Schlüssel-Merkmale (730, 740, 750) umfasst.

4. System nach einem vorhergehenden Anspruch, wobei das zumindest eine Datenelement eine E-Mail-Adresse umfasst.

5. System nach einem vorhergehenden Anspruch, wobei das zumindest eine Datenelement eine IP-Adresse umfasst.

6. System nach Anspruch 3, wobei jedes von den Zwei-Schlüssel-Merkmalen aus einem Satz von zumindest zwei Datenelementen erzeugt wird, der ein erstes Datenelement und ein zweites Datenelement umfasst, die innerhalb der zuvor empfangenen vorgeschlagenen Transaktionen enthalten sind, und wobei jedes von den Zwei-Schlüssel-Merkmalen ferner basierend auf dem zugewiesenen vorbestimmten Operator und einem spezifizierten Zeitrahmen erzeugt wird und optional:
wobei der zugewiesene vorbestimmte Operator eine ZÄHLUNG umfasst,
wobei der zugewiesene vorbestimmte Operator einen Entropiewert umfasst, oder
wobei der zugewiesene vorbestimmte Operator einen Prozentwert umfasst, der den Prozentsatz von zuvor empfangenen vorgeschlagenen Transaktionen reflektiert, die sowohl das erste Datenelement als auch das zweite Datenelement enthalten.

7. Computerimplementiertes Verfahren zum Erzeugen von Betrugsbewertungen, wobei das Verfahren in einem Computersystem implementiert ist, das einen oder mehrere Prozessoren umfasst, die dazu konfiguriert sind, Computerprogrammmodule auszuführen, wobei das Verfahren die folgenden Schritte umfasst:
Empfangen von vorherigen Transaktionsdaten, wobei die vorherigen Transaktionsdaten zumindest ein Datenelement assoziiert mit einzelnen Personen umfassen;
Extrahieren der vorherigen Transaktionsdaten, um zumindest ein Paar von Merkmalssätzen zu erzeugen, wobei jeder von dem zumindest einen Paar von Merkmalssätzen aus einer jeweils unterschiedlichen von Gruppierungen der vorherigen Transaktionsdaten stammt, wobei die Gruppierungen zeitlich getrennt sind, wodurch zumindest eine der Gruppierungen der vorherigen Transaktionsdaten aktueller als eine andere der Gruppierungen der vorherigen Transaktionsdaten ist, wobei jeder von dem zumindest einen Paar von Merkmalssätzen zumindest ein extrahiertes Merkmal umfasst, welches das zumindest eine Datenelement umfasst, das a) innerhalb der vorherigen Transaktionsdaten enthalten ist, und b) gemäß einem zugewiesenen vorbestimmten Operator ausgewählt aus einer Vielzahl von vorbestimmten Operatoren messbar ist, wobei ein erster Satz von extrahierten Merkmalen, der aus einer weniger aktuellen Gruppierung der vorherigen Transaktionsdaten erzeugt wird, gemäß einem vorbestimmten Plan abhängig von einer Verfügbarkeit von Rechenressourcen erzeugt wird, und wobei:
das zumindest eine extrahierte Merkmal ein Ergebnis umfasst, das darauf basiert, dass das zumindest eine Datenelement innerhalb der vorherigen Transaktionsdaten als solches enthalten ist, dass das zumindest eine der Datenelemente innerhalb der vorherigen Transaktionsdaten über einen definierten Zeitraum erscheint;
Empfangen einer vorgeschlagenen Transaktion (710) von einem Kundenteilnehmer an die vorgeschlagene Transaktion;
Auswählen, gemäß der Vielzahl von vorbestimmten Operatoren, des zumindest einen extrahierten Merkmals von dem zumindest einen Paar der jeweiligen Merkmalssätze, um es auf die vorgeschlagene Transaktion anzuwenden; und
Anwenden des ausgewählten zumindest einen extrahierten Merkmals auf die vorgeschlagene Transaktion in Echtzeit, um Vorhandensein des zumindest einen extrahierten Merkmals innerhalb der vorgeschlagenen Transaktion zu detektieren und eine Betrugsbewertung basierend auf dem Vorhandensein zu erzeugen,
wobei das Auswählen und das Anwenden des zumindest einen extrahierten Merkmals durch ein Maschinenlernmodell (300) ausgeführt werden, welches das zumindest eine extrahierte Merkmal auswählt;
wobei das zumindest eine extrahierte Merkmal, das aus der aktuelleren Gruppierung aus früheren Transaktionsdaten stammt, in Echtzeit als Reaktion darauf erzeugt wird, dass zumindest ein Teil der aktuelleren Gruppierung aus früheren Transaktionsdaten als betrügerisch bestimmt wird, und
wobei einer oder mehrere von dem Paar von Merkmalssätzen Eingabe umfassen, die dem Maschinenlernmodell zugeführt wird, wobei das Maschinenlernmodell den einen oder die mehreren Merkmalssätze basierend auf Rückmeldungsdaten von dem Kundenteilnehmer aktualisiert, die späteres Wissen darüber reflektieren, ob eine Transaktion tatsächlich betrügerisch war, und das Maschinenlernmodell anschließend gemäß der Rückmeldung angepasst wird, um ein oder mehrere weitere zumindest ein extrahiertes Merkmal zu erzeugen, welches das Maschinenlernmodell aufruft, um die Betrugsbewertung zu erzeugen.

8. Verfahren nach Anspruch 7, ferner umfassend den Schritt des Anwendens eines zusätzlichen Betrugsmodells vor und des Zusammenführens der Ergebnisse des zusätzlichen Betrugsmodells mit der Betrugsbewertung, um eine zusammengesetzte Betrugsbewertung zu erzeugen.

9. Verfahren nach Anspruch 8 oder Anspruch 8, wobei die extrahierten Merkmale Einzelschlüsselmerkmale (720) umfassen.

10. Verfahren nach Anspruch 7 oder Anspruch 8, wobei die extrahierten Merkmale Zwei-Schlüssel-Merkmale (730, 740, 750) umfassen.

11. Verfahren nach einem der Ansprüche 7 bis 10, wobei das zumindest eine Datenelement eine E-Mail-Adresse umfasst.

12. Verfahren nach einem der Ansprüche 7 bis 11, wobei das zumindest eine Datenelement eine IP-Adresse umfasst.

13. Verfahren nach Anspruch 10, wobei jedes von den Zwei-Schlüssel-Merkmalen aus einem Satz von zumindest zwei Datenelementen erzeugt wird, der ein erstes Datenelement und ein zweites Datenelement umfasst, die innerhalb der vorherigen Transaktionsdaten enthalten sind, und wobei jedes von den Zwei-Schlüssel-Merkmalen ferner basierend auf dem zugewiesenen vorbestimmten Operator und einem spezifizierten Zeitrahmen erzeugt wird, und wobei optional der zugewiesene vorbestimmte Operator eine ZÄHLUNG umfasst.

14. Verfahren nach Anspruch 10, wobei jedes von den Zwei-Schlüssel-Merkmalen aus einem Satz von zumindest zwei Datenelementen erzeugt wird, der ein erstes Datenelement und ein zweites Datenelement umfasst, die innerhalb der vorherigen Transaktionsdaten enthalten sind, und wobei jedes von den Zwei-Schlüssel-Merkmalen ferner basierend auf dem zugewiesenen vorbestimmten Operator und einem spezifizierten Zeitrahmen erzeugt wird und wobei der zugewiesene vorbestimmte Operator einen Entropiewert umfasst, und wobei optional der zugewiesene vorbestimmte Operator einen Prozentwert umfasst, der den Prozentsatz von vorherigen Transaktionsdaten reflektiert, die sowohl das erste Datenelement als auch das zweite Datenelement enthalten.

## Revendications

1. Système configuré pour générer des scores de fraude, le système comprenant :
un ou plusieurs processeurs configurés pour exécuter des modules de programme informatique, et un stockage physique ;
un module de programme informatique d'ingestion de données opérationnel pour recevoir une transaction proposée entrante actuelle (710) d'un participant client à ladite transaction proposée entrante actuelle ;
un module de programme informatique d'extraction de caractéristiques (330) opérationnel pour traiter les transactions proposées précédemment reçues afin de générer au moins une caractéristique extraite comprenant au moins un élément de données étant a) contenu au sein desdites transactions proposées précédemment reçues et b) mesurable selon un opérateur prédéterminé attribué sélectionné parmi une pluralité d'opérateurs prédéterminés, dans lequel :
ladite au moins une caractéristique extraite comprend un résultat basé sur le fait que ledit au moins un élément de données soit contenu au sein desdites transactions proposées précédemment reçues, de sorte que ledit au moins un élément de données apparaît au sein desdites transactions proposées précédemment reçues sur une période de temps définie survenant avant le moment où ledit module de programme informatique d'ingestion de données reçoit ladite transaction proposée entrante actuelle ;
une première base de données contenue au sein dudit stockage physique, ladite première base de données comprenant un premier ensemble de fonctionnalités extraites générées par ledit module de programme informatique d'extraction de caractéristiques selon un ou plusieurs de ladite pluralité d'opérateurs prédéterminés, dans lequel ladite première base de données est une base de données de vitesse (410), dans lequel les caractéristiques extraites qui y sont contenues sont générées selon un calendrier prédéterminé dépendant d'une disponibilité de ressources informatiques ;
une deuxième base de données, ladite deuxième base de données étant contenue au sein dudit stockage physique et comprenant un deuxième ensemble de caractéristiques extraites générées par ledit module de programme informatique d'extraction de caractéristiques selon un ou plusieurs de ladite pluralité d'opérateurs prédéterminés, dans lequel ledit deuxième ensemble de caractéristiques extraites sont a) extraites des transactions proposées précédemment reçues qui sont plus actuelles que les transactions proposées précédemment reçues utilisées pour générer ledit premier ensemble de caractéristiques extraites et b) générées, en temps réel, en réponse à la détermination qu'une ou plusieurs desdites transactions plus actuelles précédemment reçues correspondantes sont frauduleuses ; et
un module de programme informatique d'application de caractéristiques (340) opérationnel pour, en temps réel, appliquer ledit premier et/ou ledit deuxième ensemble de caractéristiques extraites, par rapport à ladite transaction proposée entrante actuelle, afin de détecter une ou plusieurs caractéristiques de ladite transaction proposée entrante actuelle qui sont partagées avec une ou plusieurs des caractéristiques extraites dudit premier et/ou dudit deuxième ensemble de caractéristiques extraites, et de générer au moins un score de fraude sur la base du partage,
dans lequel chacun dudit module informatique d'extraction de caractéristiques et dudit module informatique d'application de caractéristiques sont compris dans un modèle d'apprentissage automatique (300) qui génère lesdits premier et deuxième ensembles de caractéristiques extraites ; et
dans lequel un ou plusieurs desdits premier et deuxième ensembles de caractéristiques extraites comprennent une entrée fournie au modèle d'apprentissage automatique, le modèle d'apprentissage automatique mettant à jour lesdits un ou plusieurs premier et deuxième ensembles de caractéristiques extraites sur la base de données de rétroaction, provenant du participant client, qui reflètent une connaissance ultérieure du fait qu'une transaction était réellement frauduleuse, et le modèle d'apprentissage automatique étant ultérieurement ajusté, selon ladite rétroaction, pour générer un ou plusieurs autres premier et deuxième ensembles de caractéristiques extraites que ledit modèle d'apprentissage automatique invoque pour générer ledit au moins un score de fraude.

2. Système selon la revendication 1, dans lequel ledit premier ensemble de caractéristiques extraites comprend des caractéristiques à clé unique (720).

3. Système selon la revendication 1, dans lequel ledit premier ensemble de caractéristiques extraites comprend des caractéristiques à deux clés (730, 740, 750).

4. Système selon l'une quelconque revendication précédente, dans lequel ledit au moins un élément de données comprend une adresse e-mail.

5. Système selon l'une quelconque revendication précédente, dans lequel ledit au moins un élément de données comprend une adresse IP.

6. Système selon la revendication 3, dans lequel chacune desdites caractéristiques à deux clés est générée à partir d'un ensemble d'au moins deux éléments de données comprenant un premier élément de données et un deuxième élément de données inclus au sein desdites transactions proposées précédemment reçues et dans lequel chacune desdites caractéristiques à deux clés est en outre générée sur la base dudit opérateur prédéterminé attribué et d'une période de temps spécifiée et facultativement :
dans lequel ledit opérateur prédéterminé attribué comprend un COMPTE,
dans lequel ledit opérateur prédéterminé attribué comprend une valeur d'entropie, ou
dans lequel ledit opérateur prédéterminé attribué comprend une valeur de pourcentage reflétant le pourcentage de transactions proposées précédemment reçues qui contiennent à la fois ledit premier élément de données et ledit deuxième élément de données.

7. Procédé mis en œuvre par ordinateur pour générer des scores de fraude, le procédé étant mis en œuvre dans un système informatique comprenant un ou plusieurs processeurs configurés pour exécuter des modules de programme informatique, le procédé comprenant les étapes de :
réception de données de transaction précédentes, lesdites données de transaction précédentes comprenant au moins un élément de données associé à des personnes individuelles ;
extraction desdites données de transaction précédentes pour générer au moins une paire d'ensembles de caractéristiques, chacune desdits au moins une paire d'ensembles de caractéristiques provenant de l'un respectivement différent des groupes desdites données de transaction précédentes, dans lequel lesdits groupes sont temporellement séparés, moyennant quoi au moins un des groupes desdites données de transaction précédentes est plus actuel qu'un autre desdits groupes desdites données de transaction précédentes, chacune de ladite au moins une paire d'ensembles de caractéristiques comprenant au moins une caractéristique extraite comprenant ledit au moins un élément de données étant a) contenu au sein desdites données de transaction précédentes et b) mesurable selon un opérateur prédéterminé attribué sélectionné parmi une pluralité d'opérateurs prédéterminés, dans lequel un premier ensemble de caractéristiques extraites, généré à partir d'un groupe moins actuel desdites données de transaction précédentes, est généré selon un calendrier prédéterminé dépendant d'une disponibilité de ressources informatiques, et dans lequel :
ladite au moins une caractéristique extraite comprend un résultat basé sur le fait que ledit au moins un élément de données soit contenu au sein desdites données de transaction précédentes, de sorte que ledit au moins un desdits éléments de données apparaît au sein desdites données de transaction précédentes sur une période de temps définie ;
réception d'une transaction proposée (710) d'un participant client à ladite transaction proposée ;
sélection, selon ladite pluralité d'opérateurs prédéterminés, de ladite au moins une caractéristique extraite, de ladite au moins une paire desdits ensembles de caractéristiques respectifs, à appliquer à ladite transaction proposée ; et
application de ladite au moins une caractéristique extraite sélectionnée à ladite transaction proposée, en temps réel, pour détecter la présence de ladite au moins une caractéristique extraite au sein de ladite transaction proposée, et générer un score de fraude sur la base de la présence,
dans lequel ladite sélection et ladite application de ladite au moins une caractéristique extraite sont exécutées par un modèle d'apprentissage automatique (300) qui sélectionne ladite au moins une caractéristique extraite ;
dans lequel ladite au moins une caractéristique extraite provenant dudit groupe plus actuel de données de transaction précédentes est générée, en temps réel, en réponse à la détermination qu'au moins une partie dudit groupe plus actuel de données de transaction précédentes est frauduleuse, et
dans lequel une ou plusieurs de ladite paire d'ensembles de caractéristiques comprennent une entrée fournie au modèle d'apprentissage automatique, le modèle d'apprentissage automatique mettant à jour lesdits un ou plusieurs ensembles de caractéristiques sur la base de données de rétroaction, provenant du participant client, qui reflètent une connaissance ultérieure du fait qu'une transaction était réellement frauduleuse, et le modèle d'apprentissage automatique étant ultérieurement ajusté, selon ladite rétroaction, pour générer une ou plusieurs autres au moins une caractéristique extraite que ledit modèle d'apprentissage automatique invoque pour générer ledit score de fraude.

8. Procédé selon la revendication 7, comprenant en outre l'étape d'application d'un modèle de fraude supplémentaire avant et de fusion des résultats dudit modèle de fraude supplémentaire au score de fraude pour générer un score de fraude composite.

9. Procédé selon la revendication 8 ou la revendication 8, dans lequel lesdites caractéristiques extraites comprennent des caractéristiques à clé unique (720).

10. Procédé selon la revendication 7 ou la revendication 8, dans lequel lesdites caractéristiques extraites comprennent des caractéristiques à deux clés (730, 740, 750).

11. Procédé selon l'une quelconque des revendications 7 à 10, dans lequel ledit au moins un élément de données comprend une adresse e-mail.

12. Procédé selon l'une quelconque des revendications 7 à 11, dans lequel ledit au moins un élément de données comprend une adresse IP.

13. Procédé selon la revendication 10, dans lequel chacune desdites caractéristiques à deux clés est générée à partir d'un ensemble d'au moins deux éléments de données comprenant un premier élément de données et un deuxième élément de données inclus au sein desdites données de transaction précédentes et dans lequel chacune desdites caractéristiques à deux clés est en outre générée sur la base dudit opérateur prédéterminé attribué et d'une période de temps spécifiée, et facultativement dans lequel ledit opérateur prédéterminé attribué comprend un COMPTE.

14. Procédé selon la revendication 10, dans lequel chacune desdites caractéristiques à deux clés est générée à partir d'un ensemble d'au moins deux éléments de données comprenant un premier élément de données et un deuxième élément de données inclus au sein desdites données de transaction précédentes et dans lequel chacune desdites caractéristiques à deux clés est en outre générée sur la base dudit opérateur prédéterminé attribué et d'une période de temps spécifiée et dans lequel ledit opérateur prédéterminé attribué comprend une valeur d'entropie, et facultativement dans lequel ledit opérateur prédéterminé attribué comprend une valeur de pourcentage reflétant le pourcentage de données de transaction précédentes qui contiennent à la fois ledit premier élément de données et ledit deuxième élément de données.
